# EUROPEAN PATENT SPECIFICATION

(11) **EP 0 805 584 B1**
(45) Date of publication and mention of the grant of the patent: **12.09.2001**
(21) Application number: 97102689.3
(22) Date of filing: 19.02.1997
(51) Int. Cl.: H04N 1/06

(54) **Capstan driven virtual internal drum imagesetter**
Bilderzeuger mit virtueller, innen aufzeichnender Trommel und Kapstan-Antrieb
Composeur d'image à tambour interne virtuel entraîné par cabestan

(30) Priority: 30.04.1996 US 640048; 30.04.1996 US 640308
(43) Date of publication of application: 05.11.1997
(73) Proprietor: Agfa Corporation, Ridgefield Park, NJ 07660-2199 (US)
(72) Inventor: Bellemore, Arthur J., Chelmsford, MA 01824 (US)
(74) Representative: Van Ostaeyen, Marc Albert Jozef

(56) References cited:
- EP-A- 0 126 469
- US-A- 1 792 264
- US-A- 3 809 806
- US-A- 4 635 108

## Description

There are several types of electronic pre-press devices used in the graphic arts industry for outputting images from electronic files onto film, paper, plate material, or other image recording media. Imagesetting and platesetting devices are available in flatbed, internal drum, external drum, and capstan-type engine configurations. Each configuration offers varying features and benefits, depending on the demands of the user. The user's demands, such as image quality and resolution, printing run length, and work flow volume or output speed can determine the best configuration for the job. For example, in a capstan system the recording media is in a web form and has a continuous motion through the device so that imaging occurs without delays for media loading and unloading. In an internal drum system, an advantage is realized because of the symmetry of the internal drum, in a relatively simple and inexpensive optical system compared to an optical system in a capstan system. Typical capstan systems require an expensive F-theta lens to allow the scanned beam to be focused across the flat scan line.

Further disadvantages may be associated with each type of output device. For example, a large and expensive drum for an internal drum system is cast of aluminum and requires precision machining on the drum surface. Some internal and external drum systems require expensive vacuum systems to keep the media stationary against the drum during imaging. Delays in imaging can occur frequently due to loading and unloading sheet form recording media. Also, the floor space generally required by an internal drum imagesetter is large.

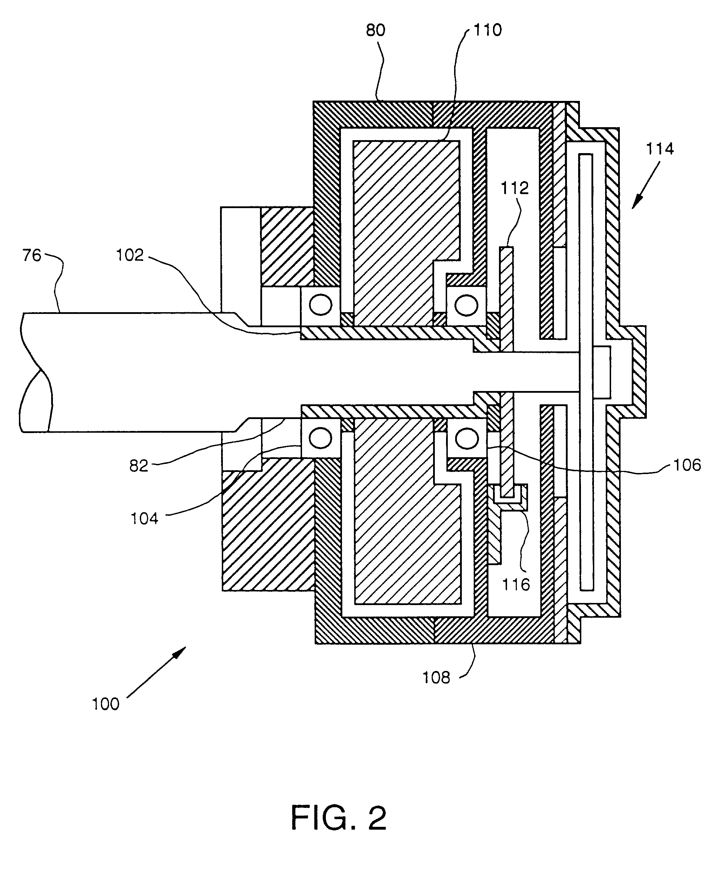

For example US 1,792,264 describes an apparatus for the transmission of pictures having two spaced-apart members between which a receiving sheet is supported, with the two members extending lengthwise over a certain distance of the receiving sheet transport path and an exposure takes place at the end of the member, i.e. at the transition from the area from which the receiving sheet is guided between the two members into the area in which the receiving sheet extends without guidance, see Fig. 2 therein. From Fig. 5 therein a further variant may be gathered in which the receiving sheet is brought into the desired shape through a slot in the bottom of a cabinet with the exposure of the receiving sheet equally taking place when the guided area is left.

From the US 3,809,806 a film recording apparatus is known in which a light beam is deflected from an optical spinner to a film with the film being brought into circle section shape by it fitting closely against a film bridge of desired shape due to its weight. This printed document is considered the closest prior art and has been adduced to form the preamble of claim 1.

Given the above described features of the prior art devices and some of the problems encountered therewith, it is the object of the invention to provide an inexpensive imaging device for outputting images from electronic files onto film, paper, plate material, or other image recording media providing images with improved quality as well as a corresponding method.

This task is solved by an imaging system with the features of claim 1 as well as by a method for recording an image with the features of claim 7.

It is an aspect of the present invention to increase the relative work flow volume or speed desired for outputting images as compared to conventional output devices.

It is an aspect of the invention to use a simple optical system as in an internal drum type output device, for example to eliminate the use of an F-theta lens.

It is a specific aspect of the invention to incorporate the advantages of an internal drum type imaging system with the advantage of a capstan type imaging system having a continuous motion of the image recording media.

It is a specific aspect of the invention to eliminate the need for a large and expensive internal drum as can be typical for internal drum output devices by urging the image recording media into the shape of an internal drum forming a virtual drum.

It is an aspect of the invention to reduce the floor space required by the imaging system, by eliminating a large and spacious internal drum as known in the prior art.

The present invention provides a method and apparatus for recording an image onto a web-type image recording media. The invention comprises a media transport system for transporting web-type image recording media through the imaging system and a media imaging station for recording an image onto the media. The media imaging station includes a curved support which supports the media and forms the media into a virtual drum. The media imaging station includes a scanning mechanism for scanning a modulated image recording beam across the virtual drum in a scan line. The media transport system transports the media relative to the curved support during scanning by the scanning mechanism to form a series of adjacent scan lines. The present invention further provides an electronic prepress apparatus/method including a computer workstation for creating, previewing, storing and transferring electronic image files to be outputted onto recording media. The workstation controls other components of the electronic prepress system, which can include an image processor for converting the electronic image files transferred from the computer workstation into digital data files. An output device, for outputting the digital data files onto recording media in a form of images previewed on said computer means, includes a media transport mechanism for transporting recording media along a media path, a curved support for supporting the media and forming the media into a virtual drum having an axis parallel to the media path, and a scanning apparatus for scanning a modulated recording beam representing the digital data files across the virtual drum in a scan line.

The objects and features of the invention will be better understood and further objects and advantageous of the invention will become apparent in the following detailed description of the invention, when taken with the accompanying drawing(s), in which:
**Figure 1** is a preferred embodiment of a virtual drum, capstan driven imaging device according to the present invention.
**Figure 2** is a sectional view of an assembled integrated rotary drive apparatus as a preferred embodiment for a drive motor and roller shaft connection in a capstan drive of the capstan driven imaging device according to the present invention.
**Figure 3** is an illustrative view of an electronic prepress system including a workstation, a RIP, a capstan driven imaging output device according to the present invention, and an on-line processor.

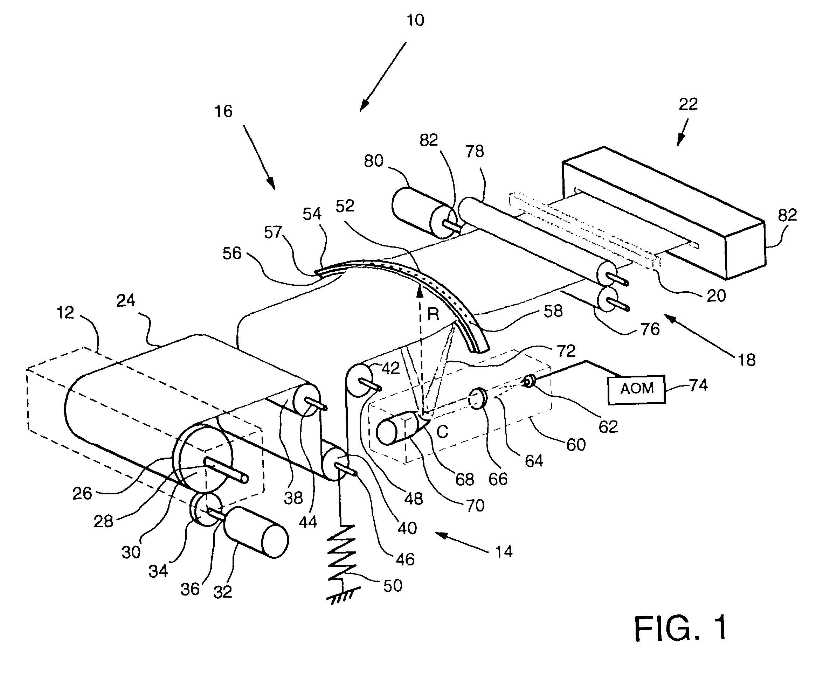

Referring to the **Fig. 1,** a capstan driven virtual internal drum imaging system is shown, generally indicated as 10, according to the present invention. The imaging system 10 has a media supply station 12, a media tensioning station 14, an imaging station 16, a capstan drive 18, a media cutter 20, and a media take-up station 22. Web type image recording media 24 is used in the imaging system 10 and can be paper, film, or plate type material.

The media supply station 12 contains a supply roll of the media 24 which is supported on a roll shaft 28 which has a drive gear 30 on the outer end of the shaft 28. The drive gear 30 is driven by a motor 32 which rotates the drive gear 30 through a motor gear 34 connected to the motor shaft 36. The media 24 is fed through the tensioning station 14 which includes a series of rollers 38, 40, 42, which rotate freely about their respective roller shafts 44, 46, 48. A tensioning spring 50 is connected to the shaft 46 of roller 40. Roller 40 is vertically adjustable relative to the other rollers 38, 42 and relative to a support frame (not shown) to accommodate and control slack or tension in the media 24. The tensioning station 14 works in cooperation with the drive motor 32 during start and stop sequences to control the media and absorb torque disturbances. The spring has a tension measuring gauge to measure the tension or slack in the media. The gauge provides feedback to the media supply drive motor 32 to control the output torque of the drive motor 32 according to the amount of tension in the media.

The imaging station 16 includes a curved media platen 52 which has an upper surface 54 and a lower surface 56 between which the media 24 passes. A space 57 is provided between the upper and lower surfaces 54, 56 for the media 24, the space being a few mils thicker than the thickness of the media 24. The curved media platen 52 can be provided with a mechanism to adjust the space 57 between the upper and lower surfaces 54, 56, such as with a precision screw and nut assembly on the outer ends of the platen (not shown), to accommodate varying thicknesses of media 24. The lower surface 56 is provided with a slot 58 through which the media 24 is imaged. In the vicinity of the slot 58 the media 24 is curved by the platen 52 creating a radius of curvature R in the media with a center of curvature C to form a virtual drum for optimal imaging according to the present invention. In Fig. 1 the curved media platen 52 is shown having a relatively narrow width in the preferred embodiment of the invention. However, it will be appreciated that the width of the platen 52 in the direction of the media motion can be larger, and that the curvature of the media platen need not be uniform over the width of the platen. The platen can have a very large radius of curvature at the entrance and exit of the media plate so as to be flat at the entrance and exit, and to have a relatively small radius of curvature at the center of the media plate at the area of the media plate to form the virtual drum in the media where the media is imaged, and having smooth transitional areas between the entrance, center, and exit of the media platen to allow smooth passing of the media through the platen without rippling of the media. Alternatively several narrow media platens may be spaced apart along the media path. In all these variations the virtual drum is formed in the media.

A laser scanning system 60 is positioned below the curved media platen 52. A laser source 62 generates a beam 64 which is focused by an optical element 66 onto a reflective spinner 68. The spinner 68 is rotated by spin motor 70 to scan the reflected beam 72 across the virtual drum of the media 24 through slot 58 of the lower surface 56 of the media platen 52 in a scanline. The center of curvature C of the virtual drum is the same point that the beam 64 encounters the reflective spinner 68. The distance the beam travels from the spinner to the media at the slot is uniform during rotation of the spinner through an angle during which the beam scans the media. The beam spot focus remains uniform as a result. The laser source 62 is modulated on and off by an acoustic-optical modulator 74, hereinafter AOM. Alternatively, it will be understood by those skilled in the art that the AOM can be replaced by modulation of a laser diode. The media motion is continuous during beam scanning to write successive lines of half-tone dots onto the media to form a continuous image.

Motion of the media is primarily controlled by the capstan drive 18. The capstan drive 18 has a pair of nip rollers 76, 78 which are driven by drive motor 80. The nip rollers are pinched together in rolling contact so that motion is transmitted from the driven roller 76 to the other roller 78 upon its rotation. The capstan drive 18 accurately controls the media motion to synchronize the advancement of the media 24 though the imaging station 16 with the laser scanning system 60 in the following manner.

Referring to **Fig. 2,** an integrated rotary drive apparatus 100 is shown as the preferred embodiment for a connection between the drive motor 80 and nip roller shaft 82 of the capstan drive 18. The integrated rotary drive apparatus 100 has a closed loop electronic feedback controller which varies the torque output from the motor 80 for the purpose of rotating the nip roller 76 in a controlled manner. As can be seen in **Fig. 2**, the nip roller shaft 82 is supported within a hollow shaft 102 of the motor 80 supported by bearings 104, 106. The bearings are contained within a motor case 108. Mounted on the hollow shaft 102 are an inertia flywheel 110 and a rotary optical encoder disk 112 which rotate with the hollow shaft 102 and with the nip roller shaft 82. The roller shaft 82 is mechanically coupled to the hollow shaft 102 as well as to the motor armature assembly, generally shown as 114. An optical encoder reader 116 is also contained and fixed within the casing 108. The optical encoder disk 112 when aligned with encoder reader 116 provides electrical feedback to a closed loop electronic control system. The feedback comprises an electronic signal representative of the angular position and velocity of hollow shaft 200. The feedback signal is used to control the output torque of the DC motor 80 to provide motion control of the nip roller 76. Additional details of the integrated rotary drive apparatus are provided in U.S. Patent 5,450,770.

The tensioning station 14 and the capstan drive 18 are important to the invention to keep the media 24 taught during media motion through the curved media platen 52. The tensioning system 14 provides a force pulling the media tight in the reverse direction of the media motion, to the left as viewed in Fig. 1, while the capstan drive motor 80 and nip rollers 76, 78 provide a force pulling the media to the right as viewed in Fig. 1. This allows for the media 24 to smoothly transition from a flat profile at the rollers 42 and 76, 78, to the curved profile in the media platen 52 with a radius of curvature R, without rippling of the media in the areas between the rollers and the platen 52.

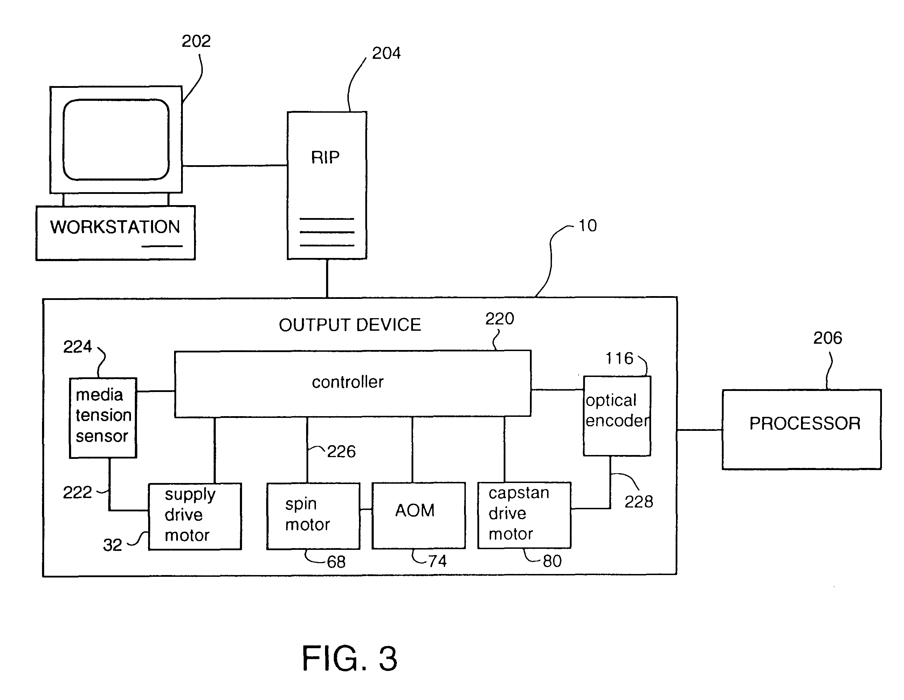

Referring to **Fig. 3,** an electronic prepress system 200 is depicted showing the output device 10 according to the present invention in connection with a workstation 202, a raster image processor (RIP) 204, and an on-line processor 206. The workstation 202 is used to create, store, preview and transfer electronic files of images, and to control other components of the electronic prepress system 200. The workstation transfers the electronic files to the RIP 204 for digitizing, i.e. converting the electronic files into digital images which can be understood by the output device 10 and sent through the AOM 74 for output. The output device 10 has a controller 220 which controls the commands and signals to the supply drive motor 32, the spin motor 68, and the capstan drive motor 80. A feedback loop 222 is shown from the media tension sensor 224 to the controller 220 which provides feedback to the supply drive motor 32 to control the output torque of the drive motor 32 according to the amount of tension in the media. The controller 220 synchronizes the control of the spin motor 68 and the AOM 74, as indicated by loop 226. Additionally, the closed loop electronic control system 228 is shown for the integrated rotary drive apparatus 100, as previously described, wherein the optical encoder 116 provides feedback to the controller 220 to control the output torque of the capstan drive motor 80. Information is exchanged between the RIP 204 and the output device 10, as well as between the output device 10 and the processor 206.

Returning to **Fig. 1,** after passing through the capstan drive 18, the media 24 is moved past the media cutter 20 and into the take-up station 22. A take-up cassette 82 collects the media 24. The media cutter can be selectively activated by an operator or it can be controlled by the output device controller 220, to cut the media between jobs or accumulate successive jobs and cut when the cassette is full. Alternatively, the take-up station may comprise an on-line processing device 206, as depicted in **Fig. 3,** when the media outputted from the present invention requires additional processing, whether it be chemical "wet" processing or mechanical "dry" type processing.

The preferred embodiment of the curved media platen described with reference to **Fig. 1** curves the media into a partial cylinder having a uniform radius of curvature. However, it will be understood by those skilled in the art that the configuration of the media platen may be other than that described herein and the optical system may be designed to accommodate such other configurations to obtain accurate and focused imaging on the media.

## Claims

1. An imaging system for recording an image onto a web-type image recording media, comprising:
(a) media transport means (18) for transporting web-type image recording media (24) through the imaging system; and
(b) a media imaging station (16) for recording an image onto the media, said media imaging station having a curved support means (52) having its axis parallel to the media path for supporting and for forming the media, said media imaging station including a scanning means (60) for scanning a modulated image recording beam onto said media in a scan line,
wherein said media transport means transports the media relative to said curved support means to form a series of adjacent scan lines during scanning by said scanning means, **characterized in that**
said curved support means (52) comprises an upper surface (54) and a lower surface (56) adjacent to said upper surface with a space (57) between said upper surface and said lower surface, said media passing through said curved support means in said space between said upper and lower surface, wherein said lower surface of said curved support means has a slot (58) that the recording beam passes through to image on said media.

2. The system according to claim 1, further including media tensioning means (14) for tensioning the media while said transport means transports the media through the imaging system.

3. The system according to claim 2, wherein said tensioning means and said transport means provide feedback to a system controller (220) in order to synchronize control of said tensioning means with said transport means in order to maintain tension in the media during transport through said curved support means.

4. The system according to one of the preceding claims, wherein said upper surface (54) has a radius of curvature slightly larger than the radius of curvature of said lower surface (56).

5. The system according to one of the preceding claims, wherein said scanning means includes a rotating reflective surface (68) which projects said recording beam onto said media in said scan line, said rotating reflective surface being at a center (C) of the radius of curvature of said upper and lower surface.

6. The system according to one of claims 2 to 5, wherein said transport means includes an optical encoder means (116) that provides feedback to said system controller (220) and said tensioning system includes a tensioning sensor (224) that provides feedback to said system controller.

7. A method for recording an image onto a web-type image recording media in a imaging system, comprising the steps of:
- transporting web-type image recording media (24) through the imaging system (10) ;
- supporting the media in a curved form at a curved support means (52) of an imaging station (16) and forming a radius of curvature in the media by passing said media through a space (57) between an upper (54) and a lower surface (56) of said curved support means the axis of curvature being parallel to the media path;
- scanning a focused modulated image recording beam across said media at the imaging station through a slot (57) in the lower surface of said curved support means to form a scan line; and
- transporting the media relative to the imaging station during scanning by said scanning means to form a series of adjacent scan lines.

8. The method according to claim 7, further including the step of tensioning the media while transporting the media through the imaging station.

9. The method according to claim 8, further including the step of controlling transportation of the media and tensioning of the media with a system controller (220) to maintain tension in the media during media transportation through the system.

10. The method according to one of claims 7 to 9, further including smoothly transitioning the web-type media from a flat form before the imaging station to the curved form at the curved support means (52) of the imaging station and back to a flat form after the imaging station as it is transported.

11. An electronic prepress system comprising:
(a) computer means (202) for creating, previewing, storing and transferring electronic image files to be output onto recording media (24), and for controlling at least one further component of the electronic prepress system;
(b) image processing means (204) for converting the electronic image files transferred from said computer means into digital data files;
(c) output means for outputting said digital data files onto recording media in a form of images previewed on said computer means, said output means comprising a imaging system according to one of claims 1 to 6 wherein said media transport means (32, 80) transports said recording media along a media path, said curved surface has an axis parallel to the media path, and said modulated image represents said digital data files.

12. The system according to claim 11, further comprising processing means (206) for processing said recording media output by said output means.

13. A method for an electronic prepress system, comprising the steps of:
(a) creating, previewing, storing and transferring electronic image files on a computer workstation (202), the image files to be output onto recording media (24) ;
(b) controlling at least one further component of the electronic prepress system from the computer workstation;
(c) converting the electronic image files transferred from said computer means into digital data files with an image processing device (204);
(d) outputting the digital data files onto recording media in a form of images previewed on the computer workstation with an output device, the output device performing the steps of transporting recording media along a media path, the steps of a method according to one of claims 7 to 10, wherein said media is supported on a media path, said curved support means has an axis parallel to the media path, and said modulated image represents the digital data files.

14. The method according to claim 13, further comprising the step of processing the recording media output from the output device by means of a media processing device (206).

## Patentansprüche

1. Bildbelichtungssystem zum Aufzeichnen eines Bilds auf einem bahnartigen Bildaufzeichnungsmedium, das folgendes umfaßt:
(a) ein Medientransportmittel (18) zum Transportieren von bahnartigen Bildaufzeichnungsmedien (24) durch das Bildbelichtungssystem; und
(b) eine Medienbelichtungsstation (16) zum Aufzeichnen eines Bilds auf dem Medium, wobei die Medienbelichtungsstation ein gekrümmtes Stützmittel (52), dessen Achse parallel zu dem Medienweg verläuft, zum Stützen und zum Formen des Mediums aufweist, wobei die Medienbelichtungsstation ein Abtastmittel (60) zum Abtasten eines modulierten Bildaufzeichnungsstrahls auf das Medium in einer Abtastzeile enthält,
wobei das Medientransportmittel das Medium relativ zu dem gekrümmten Stützmittel transportiert, um während des Abtastens durch das Abtastmittel eine Reihe benachbarter Abtastzeilen zu bilden, **dadurch gekennzeichnet, daß**
das gekrümmte Stützmittel (52) eine obere Fläche (54) und eine untere Fläche (56) neben der oberen Fläche umfaßt, wobei sich zwischen der oberen Fläche und der unteren Fläche ein Raum (57) befindet, wobei das Medium das gekrümmte Stützmittel in dem Raum zwischen der oberen und unteren Fläche durchläuft, wobei die untere Fläche des gekrümmten Stützmittels einen Schlitz (58) aufweist, durch den der Aufzeichnungsstrahl zur Abbildung auf dem Medium läuft.

2. System nach Anspruch 1, weiterhin mit einem Medienspannmittel (14) zum Spannen des Mediums, während das Transportmittel das Medium durch das Bildbelichtungssystem transportiert.

3. System nach Anspruch 2, wobei das Spannmittel und das Transportmittel eine Rückkopplung an eine Systemsteuerung (220) liefern, um die Steuerung des Spannmittels mit dem Transportmittel zu synchronisieren, um die Spannung in dem Medium während des Transports durch das gekrümmte Stützmittel aufrechtzuerhalten.

4. System nach einem der vorhergehenden Ansprüche, wobei die obere Fläche (54) einen Krümmungsradius aufweist, der geringfügig größer ist als der Krümmungsradius der unteren Fläche (56).

5. System nach einem der vorhergehenden Ansprüche, wobei das Abtastmittel eine sich drehende reflektierende Fläche (68) enthält, die den Aufzeichnungsstrahl in der Abtastzeile auf das Medium projiziert, wobei sich die drehende reflektierende Fläche in einer Mitte (C) des Krümmungsradius der oberen und unteren Fläche befindet.

6. System nach einem der Ansprüche 2 bis 5, wobei das Transportmittel ein optisches Codiermittel (116) enthält, das eine Rückkopplung an die Systemsteuerung (220) liefert, und das Spannsystem einen Spannsensor (224) enthält, der eine Rückkopplung an die Systemsteuerung liefert.

7. Verfahren zum Aufzeichnen eines Bilds auf einem bahnartigen Bildaufzeichnungsmedium, mit den folgenden Schritten:
- Transportieren des bahnartigen Bildaufzeichnungsmediums (24) durch das Bildbelichtungssystem (10);
- Stützen des Mediums in einer gekrümmten Form an einem gekrümmten Stützmittel (52) einer Bildbelichtungsstation (16) und Bilden eines Krümmungsradius in dem Medium durch Schicken des Mediums durch einen Raum (57) zwischen einer oberen (54) und einer unteren Fläche (56) des gekrümmten Stützmittels, wobei die Krümmungsachse parallel zu dem Medienweg verläuft;
- Führen eines fokussierten modulierten Bildaufzeichnungsstrahls über das Medium bei der Bildbelichtungsstation durch einen Schlitz (57) in der unteren Fläche des gekrümmten Stützmittels, um eine Abtastzeile zu bilden; und
- Transportieren des Mediums relativ zu der Bildbelichtungsstation während des Abtastens durch das Abtastmittel, um eine Reihe benachbarter Abtastzeilen zu bilden.

8. Verfahren nach Anspruch 7, weiterhin mit dem Schritt, das Medium während seines Transports durch die Bildbelichtungsstation zu spannen.

9. Verfahren nach Anspruch 8, weiterhin mit dem Schritt, den Transport des Mediums und das Spannen des Mediums mit einer Systemsteuerung (220) zu steuern, um die Spannung in dem Medium während seines Transports durch das System aufrechtzuerhalten.

10. Verfahren nach einem der Ansprüche 7 bis 9, weiterhin mit einem glatten Übergang des bahnartigen Mediums, während seines Transports, von einer flachen Form vor der Bildbelichtungsstation zu der gekrümmten Form bei dem gekrümmten Stützmittel (52) der Bildbelichtungsstation und zurück zu einer flachen Form hinter der Bildbelichtungsstation.

11. Elektronisches Druckvorstufensystem, das folgendes umfaßt:
(a) ein Computermittel (202) zum Erzeugen, Kontrollieren, Speichern und Übertragen von auf einem Aufzeichnungsmedium (24) auszugebenden elektronischen Bilddateien und zum Steuern mindestens eines weiteren Bestandteils des elektronischen Druckvorstufensystems;
(b) ein Bildverarbeitungsmittel (204) zum Konvertieren der von dem Computermittel übertragenen elektronischen Bilddateien in Dateien mit digitalen Daten;
(c) ein Ausgabemittel zum Ausgeben der Dateien mit digitalen Daten auf ein Aufzeichnungsmedium in Form von auf dem Computermittel kontrollierten Bildern, wobei das Ausgabemittel ein Bildbelichtungssystem gemäß einem der Ansprüche 1 bis 6 umfaßt, wobei das Medium auf einem Medienweg gestützt wird, das Mediumtransportmittel (32, 80) das Aufzeichnungsmedium entlang einem Medienweg transportiert, die gekrümmte Fläche eine Achse parallel zu dem Medienweg aufweist und das modulierte Bild die Dateien mit digitalen Daten darstellt.

12. System nach Anspruch 11, weiterhin mit einem Verarbeitungsmittel (206) zum Verarbeiten des von dem Ausgabemittel ausgegebenen Aufzeichnungsmediums.

13. Verfahren für ein elektronisches Druckvorstufensystem, mit den folgenden Schritten:
(a) Erzeugen, Kontrollieren, Speichern und Übertragen elektronischer Bilddateien auf einer Computerworkstation (202), wobei die Bilddateien auf einem Aufzeichnungsmedium (24) ausgegeben werden;
(b) Steuern mindestens eines weiteren Bestandteiles des elektronischen Druckvorstufensystems von der Computerworkstation;
(c) Konvertieren der von dem Computermittel übertragenen elektronischen Bilddateien in Dateien mit digitalen Daten mit einer Bildverarbeitungseinrichtung (204);
(d) Ausgeben der Dateien mit digitalen Daten auf ein Aufzeichnungsmedium in Form von auf der Computerworkstation kontrollierten Bildern mit einer Ausgabeeinrichtung, wobei die Ausgabeeinrichtung die Schritte des Transportierens eines Aufzeichnungsmediums entlang einem Medienweg, die Schritte eines Verfahrens gemäß einem der Ansprüche 7 bis 10 ausführt, wobei das Medium auf einem Medienweg gestützt wird, das gekrümmte Stützmittel eine Achse parallel zu dem Medienweg aufweist und das modulierte Bild die Dateien mit digitalen Daten darstellt.

14. Verfahren nach Anspruch 13, weiterhin mit dem Schritt des Verarbeitens des von der Ausgabeeinrichtung ausgegebenen Aufzeichnungsmediums mit Hilfe einer Medienverarbeitungseinrichtung (206).

## Revendications

1. Système d'imagerie pour enregistrer une image sur un support d'enregistrement d'image de type bande, comprenant :
(a) un moyen de transport de support (18) pour transporter le support d'enregistrement d'image de type bande (24) à travers un système d'imagerie ; et
(b) une station d'imagerie du support (16) pour enregistrer une image sur le support, ladite station d'imagerie du support comportant un moyen d'appui incurvé (52) dont l'axe est parallèle à la trajectoire du support, pour servir d'appui et pour mettre en forme le support, ladite station d'imagerie du support comportant un moyen de balayage (60) pour balayer un faisceau d'enregistrement d'image modulé sur ledit support, selon une ligne de balayage,
dans lequel ledit moyen de transport du support transporte le support relativement audit moyen d'appui incurvé afin de former une série de lignes de balayage adjacentes durant le balayage par ledit moyen de balayage,
**caractérisé en ce que**
ledit moyen d'appui incurvé (52) comprend une surface supérieure (54) et une surface inférieure (56) adjacente à ladite surface supérieure, avec un espace (57) entre ladite surface supérieure et ladite surface inférieure, ledit support passant à travers ledit moyen d'appui incurvé dans ledit espace entre lesdites surfaces supérieure et inférieure, ladite surface inférieure dudit moyen d'appui incurvé possédant une fente (58) à travers laquelle passe le faisceau d'enregistrement pour imager ledit support.

2. Système selon la revendication 1, comportant en outre un moyen de mise sous tension du support (14) pour mettre sous tension le support tandis que ledit moyen de transport transporte le support à travers le système d'imagerie.

3. Système selon la revendication 2, dans lequel ledit moyen de mise sous tension et ledit moyen de transport fournissent une rétroaction vers un régisseur (220) du système de façon à synchroniser la commande dudit moyen de mise sous tension avec celle dudit moyen de transport pour maintenir le support tendu au cours du transport à travers ledit moyen d'appui incurvé.

4. Système selon l'une des revendications précédentes, dans lequel ladite surface supérieure (54) présente un rayon de courbure légèrement supérieur au rayon de courbure de ladite surface inférieure (56).

5. Système selon l'une des revendications précédentes, dans lequel ledit moyen de balayage comporte une surface réfléchissante rotative (68) qui projette ledit faisceau d'enregistrement sur ledit support dans ladite ligne de balayage, ladite surface réfléchissante rotative étant située au centre (C) du rayon de courbure desdites surfaces supérieure et inférieure.

6. Système selon l'une des revendications 2 à 5, dans lequel ledit moyen de transport comporte un moyen de codage optique (116) qui fournit une rétroaction vers ledit régisseur (220) du système et ledit moyen de mise sous tension comporte un détecteur de mise sous tension (224) qui fournit une rétroaction vers ledit régisseur du système.

7. Procédé pour enregistrer une image sur un support d'enregistrement d'image de type bande, comprenant les étapes consistant à :
- transporter le support d'enregistrement d'image de type bande (24) à travers un système d'imagerie (10) ;
- donner appui au support, sous une forme incurvée, au niveau d'un moyen d'appui incurvé (52) d'une station d'imagerie (16) et former un rayon de courbure dans le support par passage dudit support à travers un espace (57) entre une surface supérieure (54) et une surface inférieure (56) dudit moyen d'appui incurvé, l'axe de courbure étant parallèle à la trajectoire du support ;
- balayer un faisceau d'enregistrement d'image modulé focalisé en travers dudit support au niveau de la station d'imagerie à travers une fente (57) dans la surface inférieure dudit moyen d'appui incurvé pour former une ligne de balayage ; et
- transporter le support relativement à la station d'imagerie durant le balayage par ledit moyen de balayage pour former une série de lignes de balayage adjacentes.

8. Procédé selon la revendication 7, comportant en outre l'étape consistant à mettre sous tension le support pendant le transport du support à travers la station d'imagerie.

9. Procédé selon la revendication 8, comportant en outre l'étape consistant à réguler le transport du support et la mise sous tension du support à l'aide d'un régisseur (220) de système pour maintenir le support tendu durant le transport du support à travers le système.

10. Procédé selon l'une des revendications 7 à 9, comportant en outre la transition régulière du support de type bande d'une forme plate, avant la station 'd'imagerie, à une forme incurvée au niveau du moyen d'appui incurvé (52) de la station d'imagerie et de nouveau à une forme plate après la station d'imagerie au fur et à mesure de son transport.

11. Système de prépresse électronique comprenant :
(a) un moyen informatique (202) pour créer, prévisualiser, stocker et transférer des fichiers d'images électroniques appelés à être sortis sur un support d'enregistrement (24), et pour commander au moins un autre composant du système de prépresse électronique ;
(b) un moyen de traitement d'images (204) pour convertir les fichiers d'images électroniques transférés dudit moyen informatique en fichiers de données numériques ;
(c) un moyen de sortie pour sortir lesdits fichiers de données numériques sur le support d'enregistrement sous la forme d'images prévisualisées sur ledit moyen informatique, ledit moyen de sortie comprenant un système d'imagerie selon l'une des revendications 1 à 6 dans lequel ledit moyen de transport du support (32, 80) transporte ledit support d'enregistrement le long d'une trajectoire du support, ladite surface incurvée présente un axe parallèle à la trajectoire du support, et ladite image modulée représente lesdits fichiers de données numériques.

12. Système selon la revendication 11, comprenant en outre un moyen de traitement (206) pour traiter ledit support d'enregistrement fourni en sortie par ledit moyen de sortie.

13. Procédé pour un système de prépresse électronique comprenant les étapes consistant à :
(a) créer, prévisualiser, stocker et transférer sur une station de travail informatique (202) des fichiers d'images électroniques appelés à être sortis sur un support d'enregistrement (24),
(b) commander au moins un autre composant du système de prépresse électronique depuis la station de travail informatique ;
(c) convertir les fichiers d'images électroniques transférés dudit moyen informatique en fichiers de données numériques à l'aide d'un dispositif de traitement d'images (204) ;
(d) sortir les fichiers de données numériques sur le support d'enregistrement sous la forme d'images prévisualisées sur la station de travail informatique à l'aide d'un moyen de sortie, le moyen de sortie exécutant les étapes consistant à transporter le support d'enregistrement le long d'une trajectoire du support, les étapes d'un procédé selon l'une des revendications 7 à 10, dans lequel ledit support reçoit un appui sur la trajectoire du support, ledit moyen d'appui incurvé présente un axe parallèle à la trajectoire du support, et ladite image modulée représente lesdits fichiers de données numériques.

14. Procédé selon la revendication 13, comprenant en outre l'étape consistant à traiter le support d'enregistrement fourni en sortie par le dispositif de sortie au moyen d'un dispositif de traitement de support (206).
